# EUROPEAN PATENT APPLICATION

(11) **EP 4 847 176 A1**
(43) Date of publication of application: **02.12.2026**
(21) Application number: 25315193.0
(22) Date of filing: 30.05.2025
(51) Int. Cl.: B23C 5/20

(54) **INDEXABLE CUTTING INSERT AND MILLING TOOL**

(71) Applicant: Seco Tools AB, 737 82 Fagersta (SE)
(72) Inventor: PATRIARCA, Benoît, 737 82 FAGERSTA (SE); DERIMAY, Pascal, 737 82 FAGERSTA (SE); DUCHALAIS, Julien, 737 82 FAGERSTA (SE); ALMERSTEDT, Matilda, 737 82 FAGERSTA (SE); BERGLUND, Jenny, 737 82 FAGERSTA (SE); ERIKSSON, Sandra, 737 82 FAGERSTA (SE)
(74) Representative: Sandvik

(57) **Abstract**

An indexable cutting insert for use in milling with a substantially quadratic basic shape and comprising a peripheral surface (10) extending around the cutting insert between a rake face (2) and an abutment face (3). The peripheral surface comprises a first clearance surface (20a), a second clearance surface (20b) and a transition surface (21) fully surrounding a respective portion of the centre axis (C) of the cutting insert. The first clearance surface adjoins to the rake face. The second clearance surface adjoins to the abutment face and defines a positive clearance angle that is smaller than a positive nominal clearance angle defined by the first clearance surface. The second clearance surface is unground and comprises four substantially planar main surface portions (22) provided on a respective main side face (11a-11d) of the cutting insert, each main surface portion being substantially rectangular. The cutting insert is of small size with a diameter of an inscribed circle of the rake face smaller than or equal to 10 mm.

## Description

### FIELD OF THE INVENTION AND PRIOR ART

The present invention relates to an indexable cutting insert for milling according to the preamble of claim 1. The invention also relates to a milling tool comprising such an indexable cutting insert.

A milling tool is a rotating cutting tool, which may be provided with one or more cutting inserts detachably mounted in a respective insert seat in a tool body of the milling tool. One type of cutting insert that may be used in high feed milling is an indexable cutting insert with a substantially quadratic basic shape and designed with a positive geometry, which implies that it has a positive basic shape. A cutting insert of this type has a rake face and an abutment face arranged on opposite sides of the cutting insert and a peripheral surface that extends around the cutting insert between the rake face and the abutment face, wherein a cutting edge is formed at an intersection between the rake face and the peripheral surface. Such a cutting insert is configured to abut against a tangentially facing bottom wall in an insert seat of a tool body through the abutment face and against side support surfaces on an internal wall of the insert seat through side abutment surfaces included in the peripheral surface of the cutting insert. A cutting insert of this type is for instance previously known from US 10 906 107 B2, and is turnable into four different working positions provided by four different sets of cutting edges included in the cutting edge formed at the intersection between the rake face and the peripheral surface of the cutting insert. When a cutting edge included in one such set of cutting edges has been worn out, the cutting insert may be repositioned in its insert seat and mounted in a new working position with another one of the different sets of cutting edges in an active cutting position.

In the cutting insert disclosed in Figs 4-6 in US 10 906 107 B2, the peripheral surface of the cutting insert comprises an upper clearance surface, which is located closest to the cutting edge and which is configured to define a positive first nominal clearance angle, and a lower clearance surface, which is located between the abutment face and the upper clearance surface and which is configured to define a positive second nominal clearance angle that is smaller than said first nominal clearance angle, wherein the upper clearance surface is provided on a portion of the cutting insert that forms a pronounced overhang in relation to the portion of the cutting insert on which the lower clearance surface is provided. The cutting insert is configured to abut against side support surfaces in an insert seat of a tool body through side abutment surfaces included in said lower clearance surface.

### OBJECT OF THE INVENTION

The object of the present invention is to provide an indexable cutting insert of the above-mentioned type that has a new and favourable design.

### SUMMARY OF THE INVENTION

According to the invention, said object is achieved by means of an indexable cutting insert having the features defined in claim 1.

The indexable cutting insert according to the invention has a substantially quadratic basic shape and is turnable into four different working positions and comprises:
- a rake face and an abutment face arranged on opposite sides of the cutting insert, the cutting insert having a centre axis that extends between the rake face and the abutment face, wherein a diameter of an inscribed circle of the rake face as seen in a plan view along the centre axis is smaller than or equal to 10 mm, and wherein the abutment face comprises an abutment surface that is configured to serve as a tangential abutment surface of the cutting insert in said working positions of the cutting insert and abut against a corresponding tangential support surface in an insert seat in a tool body of a milling tool when the cutting insert is mounted in the insert seat in any of its working positions;
- a peripheral surface extending around the cutting insert between the rake face and the abutment face and comprising:
   - four main side faces, a first pair of which being arranged opposite to each other on two opposite sides of the cutting insert and a second pair of which being arranged opposite to each other on two other opposite sides of the cutting insert, and
   - four corner side faces, each of which being arranged between two adjacent main side faces;
- a first clearance surface included in the peripheral surface and fully surrounding a first portion of the centre axis, wherein the first clearance surface extends between the rake face and a first imaginary plane that is perpendicular to the centre axis, and wherein the first clearance surface is inclined in relation to the centre axis and configured to define a positive first nominal clearance angle;
- a second clearance surface included in the peripheral surface and fully surrounding a second portion of the centre axis, wherein the second clearance surface extends between the abutment face and a second imaginary plane that is perpendicular to the centre axis and located at a distance from the first imaginary plane, and wherein the second clearance surface is inclined in relation to the centre axis and configured to define a positive second nominal clearance angle that is smaller than said first nominal clearance angle;
- a transition surface included in the peripheral surface and fully surrounding a third portion of the centre axis located between said first and second portions of the centre axis, wherein the transition surface extends between the first imaginary plane and the second imaginary plane;
- a cutting edge formed at an intersection between the first clearance surface and the rake face and extending around the centre axis along a periphery of the rake face; and
- a through hole, which extends centrally through the cutting insert between the rake face and the abutment face, the through hole having a centre axis that coincides with the centre axis of the cutting insert.

The above-mentioned second clearance surface is unground and consists of four substantially planar main surface portions provided on a respective one of said main side faces and four curved corner surface portions provided on a respective one of said corner side faces, each one of said main surface portions extending from one of the four corner surface portions to another one of the four corner surface portions and having a substantially rectilinear first transverse edge through which it adjoins to the former corner surface portion, a substantially rectilinear second transverse edge through which it adjoins to the latter corner surface portion, a first longitudinal edge, which extends between the first and second transverse edges, i.e. from the first transverse edge to the second transverse edge, and is located along its full length substantially in the second imaginary plane, and an opposite second longitudinal edge, which extends between the first and second transverse edges, i.e. from the first transverse edge to the second transverse edge, and is formed at an intersection between the main surface portion and the abutment face.

From the above definition, it follows that the cutting insert is designed with a positive basic shape.

By providing a larger positive nominal clearance angle on the portion of the peripheral surface that is formed by the first clearance surface and located closest to the cutting edge and a smaller positive nominal clearance angle on the portion of the peripheral surface that is formed by the second clearance surface and located at a distance from the cutting edge, the clearance is increased immediately behind the cutting edge. The increased clearance angle immediately behind the cutting edge offers improved ramping capabilities, enables smaller cutting diameters by allowing the use of tool bodies with reduced diameters, and provides enhanced cutting performance when machining sticky materials. Furthermore, by providing a smaller positive nominal clearance angle on the portion of the peripheral surface formed by the second clearance surface, the area of the abutment face increases compared to that of a correspondingly dimensioned cutting insert in which the first clearance surface, with its larger positive nominal clearance angle, extends all the way from the rake face to the abutment face. An increased area of the abutment face implies that the stability of the cutting insert in the associated insert seat can be improved. A smaller positive nominal clearance angle on the portion of the peripheral surface formed by the second clearance surface also increases the mechanical strength of the cutting insert and reduces its susceptibility to fracture.

The cutting insert has such shape that the following condition is fulfilled: VV/MV≥0.24, where
- VV is the void volume of the through hole, and
- MV is the material volume of the cutting insert.

The void volume is defined by the boundaries of the through hole and is calculated as the volume of the void extending from a lower plane that is perpendicular to the centre axis of the cutting insert and contains a line of intersection between the through hole and the abutment face to an upper plane that is perpendicular to the centre axis of the cutting insert and contains a line of intersection between the through hole and the rake face. The material volume is the volume of the material in the cutting insert.

According to the invention, the first transverse edge of each main surface portion of said four main surface portions extends substantially perpendicularly to the first longitudinal edge of the associated main surface portion, and the second transverse edge of each main surface portion of said four main surface portions extends substantially perpendicularly to the first longitudinal edge of the associated main surface portion.

Cutting inserts for use in a milling tool are normally produced from carbide powder by pressing and sintering. Uneven compaction of carbide powder during the pressing of the cutting insert, and a resulting non-uniform powder compaction in the green body formed in the press die, can lead to deviations from the desired shape of the cutting insert and the formation of small surface cracks which can extend into the cutting insert during subsequent sintering of the green body. The small surface cracks may lead to chipping and breakouts in the cutting insert when the cutting insert is used for machining of a workpiece.

From the above definition, it follows that each substantially planar main surface portion that forms part of the second clearance surface is substantially rectangular. It has been observed that this design of the main surface portions results in a more uniform compaction of carbide powder in the lower part of the cutting insert during the pressing of the cutting insert, as compared to a correspondingly dimensioned cutting insert where the lower second clearance surface comprises main surface portions with an isosceles trapezoidal shape as illustrated in US 10 906 107 B2. During a subsequent sintering of the cutting insert, this more uniform compaction of the carbide powder in the lower part of the cutting insert will result in prevented crack formation, an improved surface flatness of the main surface portions and a higher precision with respect to the shape and tolerances of the cutting insert. It has also been observed that this design of the main surface portions results in a more durable cutting edge in the area where a curved corner cutting edge connects to an adjacent main cutting edge, i.e. an adjacent straight part of the cutting edge.

Furthermore, it has been observed that an improved form stability of the cutting insert during sintering is achieved when the condition VV/MV≥0.24 is fulfilled, and when the cutting insert is of such size that the inscribed circle of the rake face of the cutting insert has a diameter that is 10 mm or less. Furthermore, with such a small size, the cutting insert has a low production cost as a result of reduced material consumption. This small cutting insert size also enables smaller cutting diameters by allowing the use of tool bodies with reduced diameters.

In this description and the subsequent claims, the expression "substantially perpendicular" refers to an angle of 90°±1°. Thus, a transverse edge that extends "substantially perpendicularly" to a longitudinal edge forms an angle of 90°±1° with the longitudinal edge.

The fact that the second clearance surface is unground, i.e. not finished or machined by grinding, implies reduced production costs for the cutting insert. As is known to a person skilled in the art, a machined surface on a cutting insert can be identified as a ground surface by the presence of grinding lines on the surface, whereas a non-machined surface can be identified as an unground surface by the absence of such lines on the surface.

Since the second clearance surface is unground, there are no pronounced or clearly visible discontinuity lines between the different portions of the second clearance surface. Accordingly, the first and second transverse edges of each main surface portion do not appear as distinct or visible discontinuity lines on the second clearance surface. These edges define the boundary lines along which the substantially planar main surface portion meets the adjacent curved corner surface portions. The positions of these boundary lines on the second clearance surface, and thereby the positions of said first and second transverse edges on the second clearance surface, can easily be determined using a conventional and well-known method involving 3D scanning of the cutting insert followed by computer-based analysis. In this method, the substantially but not perfectly planar main surface portion is approximated by a best-fit, perfectly planar reference plane, and each adjacent curved corner surface portion is approximated by a respective best-fit, perfectly smooth reference surface. The first and second transverse edges of the main surface portion are then derived as the lines of intersection between the reference plane and each reference surface.

The first clearance surface is preferably unground, to thereby achieve a low manufacturing cost, but the first clearance surface can be ground to thereby ensure a well-defined cutting edge at the intersection between the first clearance surface and the rake face.

The above-mentioned centre axis of the cutting insert extends between a centre point of the rake face and a centre point of the abutment face. As used herein, "centre point" refers to the centroid or geometric centre of the respective face.

The above-mentioned main surface portions are intended to serve as side abutment surfaces of the cutting insert in the different working positions of the cutting insert in an insert seat of a tool body. In each working position, the cutting insert is configured to abut against side support surfaces on an internal wall of the insert seat via two of the main surface portions at a time.

According to an embodiment of the invention, each corner surface portion is conically shaped and tangentially connected to the adjacent main surface portions on either side of the corner surface portion. This implies that the corner surface portions lie on the lateral surface of a respective imaginary cone that points in a reference direction defined as a direction from the rake face towards the abutment face along the centre axis of the cutting insert. The design of the second clearance surface with rectangular, or at least substantially rectangular, main surface portions and conically shaped corner surface portions has a positive effect on the strength of the curved corner cutting edges, i.e. on the portions of the cutting edge formed at the intersection between the rake face and each one of the four corner side faces. The increased strength of the curved corner cutting edges allows ramping operations to be performed at higher feed rates when using a milling tool equipped with such cutting inserts.

According to another embodiment of the invention, the cutting insert is dimensioned such that a diameter of an inscribed circle of the rake face as seen in a plan view along the centre axis is at least 3.5 mm, preferably at least 5 mm. When the diameter of the inscribed circle is smaller than 3.5 mm, the cutting insert becomes too small and it becomes difficult to control the parameters related to the geometry of the cutting insert with normal efforts.

The cutting insert is preferable dimensioned such that a diameter of an inscribed circle of the rake face as seen in a plan view along the centre axis of the cutting insert is smaller than or equal to 8 mm. The reduced size of the cutting insert implies reduced material consumption and thereby reduced production cost. In addition, the best results in terms of the surface flatness of the main surface portions and higher precision regarding the shape and tolerances of the cutting insert have been observed when the diameter of an inscribed circle of the rake face is smaller than or equal to 8 mm and larger than or equal to 5 mm.

According to another embodiment of the invention, the first clearance surface extends in a straight line as seen in any section plane that contains the centre axis of the cutting insert and intersects the peripheral surface, wherein the first clearance surface is so arranged in relation to the transition surface and the second clearance surface that an imaginary rectilinear extension of the first clearance surface from the first imaginary plane to the abutment face, in any section plane that contains the centre axis of the cutting insert and intersects the peripheral surface, is located between the transition surface and the centre axis of the cutting insert in the region between the first and second imaginary planes and located between the second clearance surface and the centre axis of the cutting insert in the region between the second imaginary plane and the abutment face. This implies that an imaginary extension of the first clearance surface from the first imaginary plane to the abutment face extends inward of the transition surface and the second clearance surface in any radial plane about the centre axis of the cutting insert, i.e. in any plane that contains the centre axis of the cutting insert and extends radially outwards therefrom. With this arrangement of the first clearance surface, no recess is formed on the peripheral surface beneath the first clearance surface and the portion of the cutting insert provided with the cutting edge and the first clearance surface does not project as a pronounced overhang in relation to the portion of the cutting insert where the second clearance surface is provided. This implies improved support for the cutting edge and enhanced strength of the cutting insert, as compared to a correspondingly dimensioned cutting insert in which an upper first clearance surface, with a larger positive nominal clearance angle, is provided on a portion of the cutting insert that forms a pronounced overhang in relation to the portion on which a lower second clearance surface, with a smaller positive nominal clearance angle, is provided. Also the presence of the transition surface between the first and the second clearance surfaces contributes to improved support for the cutting edge and enhanced strength of the cutting insert.

Furthermore, the above-specified arrangement of the first clearance surface, which avoids a pronounced overhang on the peripheral surface of the cutting insert, results in a more uniform compaction of carbide powder in the upper part of the cutting insert during the pressing of the cutting insert, as compared to a correspondingly dimensioned cutting insert having a pronounced overhang on the peripheral surface in the manner illustrated in US 10 906 107 B2. During a subsequent sintering of the cutting insert, this more uniform compaction of the carbide powder in the upper part of the cutting insert will result in prevented crack formation, an improved surface finish and a higher precision with respect to the shape and tolerances of the cutting insert.

The above-mentioned main surface portions included in the second clearance surface are intended to serve as side abutment surfaces of the cutting insert in the different working positions of the cutting insert in an insert seat of a tool body, wherein the cutting insert, when mounted in the associated insert seat in any of its working positions, is configured to abut against side support surfaces on an internal wall of the insert seat through these side abutment surfaces. An enhanced stability of the cutting insert in the associated insert seat is achieved when a contact between the side abutment surfaces on the cutting insert and the side support surfaces on an internal wall of the insert seat occurs at a larger distance from the tangential abutment surface on the cutting insert. The above-specified arrangement of the first clearance surface, which avoids a pronounced overhang on the peripheral surface of the cutting insert, results in a more uniform compaction of carbide powder in the cutting insert inward of the upper part of the second clearance surface adjacent to the second imaginary plane. Thanks to this, improved flatness of the upper part of said main surface portions is achieved and the contact between the side abutment surfaces on the cutting insert and the side support surfaces in the insert seat can be achieved closer to the above-mentioned transition surface. Thanks to that, an enhanced stability of the cutting insert in the associated insert seat is achieved.

According to another embodiment of the invention, said first and second clearance surfaces and said transition surface are configured such that the following condition is fulfilled in any section plane across the cutting insert that contains the centre axis and intersects the peripheral surface: 0.60 ≤ H2/H ≤ 0.90, preferably 0.70 ≤ H2/H ≤ 0.90, where:
- H is the perpendicular distance from a reference plane, which is perpendicular to the centre axis and contains said abutment surface, to the cutting edge, and
- H2 is the distance from said reference plane to the second imaginary plane.

H2 corresponds, or at least substantially corresponds, to the height of the second clearance surface, as seen in a lateral view of the cutting insert. It follows from the above-mentioned condition that the second clearance surface is significantly larger than the first clearance surface, which in its turn implies that the side abutment surfaces of the cutting insert can be comparatively large and thereby provide good stability for the cutting insert when mounted in an associated insert seat in a tool body in any of its working positions. When H2/H is less than 0.60, the stability of the cutting insert in the associated insert seat can be deteriorated because contact between the cutting insert and the side support surfaces in the insert seat occurs too close to the tangential abutment surface on the cutting insert. When H2/H is more than 0.90, the cutting insert must be repositioned into a new working position already when the wear on the cutting edge is relatively small, otherwise a quick and uncontrolled growth of a flank wear can occur as the flank wear grows into the second clearance surface that has a smaller clearance angle than the first clearance surface. A further improvement in the stability of the cutting insert is observed when 0.70 ≤ H2/H, and good performance and stability can then be achieved without requiring the cutting insert to have an excessive thickness.

According to another embodiment of the invention, the distance between the first imaginary plane and the second imaginary plane is at least 0.1 times d1ₘᵢₙ and no more than 0.9 times d1ₘᵢₙ, preferably at least 0.2 times d1ₘᵢₙ and no more than 0.5 times d1ₘᵢₙ, where d1ₘᵢₙ is the shortest perpendicular distance between the second imaginary plane and the cutting edge. Thus, said distance is in the range from 0.1•d1ₘᵢₙ to 0.9•d1ₘᵢₙ, preferably from 0.2•d1ₘᵢₙ to 0.5•d1ₘᵢₙ. The distance between the first and second imaginary planes corresponds to the width of the transition surface, as seen in a lateral view of the cutting insert. The positive effect of the transition surface on the support for the cutting edge and on the strength of the cutting insert decreases when said distance is less than 0.1•d1ₘᵢₙ. When said distance is more than 0.9•d1ₘᵢₙ, the cutting insert must be repositioned into a new working position already when the wear on the cutting edge is relatively small, otherwise a quick and uncontrolled growth of a flank wear can occur as the flank wear grows into the transition surface that has a smaller clearance angle than the first clearance surface. When said distance is 0.2•d1ₘᵢₙ or more, a further improvement of the strength of the cutting insert as a result of the presence of the transition surface is observed. When said distance is less than 0.5•d1ₘᵢₙ, the cutting edge can be used until a relatively high level of wear has been reached. Hence, when said distance is from 0.2•d1ₘᵢₙ to 0.5•d1ₘᵢₙ, an optimal balance between the strength of the cutting insert and the useful life of the cutting edge is achieved.

According to another embodiment of the invention, the transition surface is concave and has a radius of curvature that is larger than or equal to 0.5 mm and smaller than or equal to 7.0 mm, preferably larger than or equal to 1.0 mm and smaller than or equal to 6.0 mm. Thus, the radius of curvature of the transition surface is in the range of 0.5-7.0 mm, preferably 1.0-6.0 mm. This curved design of the transition surface is favourable for the mechanical strength of the cutting insert and reduces its susceptibility to fracture. If the radius of curvature is smaller than 0.5 mm, the cutting insert tends to become brittle, particularly when there is a relatively large difference between the first and second nominal clearance angles. If the radius of curvature is larger than 7.0 mm, either the height of the second clearance surface is excessively reduced, thereby impairing the stability of the cutting insert in the associated insert seat due to a corresponding excessive reduction in the size of the side abutment surfaces, or the first clearance surface becomes undesirably small. If the first clearance surface is too small, wear developing during machining may grow into the transition surface, resulting in a reduced clearance angle. Optimal performance is observed when the radius of curvature of the transition surface is between 1.0 mm and 6.0 mm.

The transition surface is preferably tangentially connected to the first clearance surface on one side, and tangentially connected to the second clearance surface on the other side, as seen in any section plane that contains the centre axis and intersects the peripheral surface.

According to another embodiment of the invention, the second nominal clearance angle is larger than or equal to 1° and smaller than or equal to 15°, preferably larger than or equal to 5° and smaller than or equal to 15°. Thus, the second nominal clearance angle is in the range of 1-15°, preferably 5-15°. When the second nominal clearance angle is small, an improved stability of the cutting insert is achieved since the risk that the cutting insert slides upward in the associated insert seat is decreased, and the area of the abutment surface serving as a tangential abutment surface of the cutting insert is increased. Furthermore, the support for the cutting edge is improved and by that also the strength of the cutting edge. However, when the second nominal clearance angle is less than 1°, the cutting insert cannot be given a proper axial tipping-in angle and the second clearance surface may have inferior relief to the workpiece. When the second nominal clearance angle is 5° or more, a larger degree of freedom is achieved when it comes to axial tipping-in of the cutting insert as well as the relief between the second clearance surface and the workpiece. When the second nominal clearance angle is large, the cutting insert can be given a large axial tipping-in angle in the tool body of a milling tool, but the stability of the cutting insert and the strength of the cutting edge are decreased.

According to another embodiment of the invention, the above-mentioned first nominal clearance angle is smaller than or equal to 20°, preferably 5-20°, more preferably 10-20°, and most preferably 12-18°.

According to another embodiment of the invention, the first nominal clearance angle is at least 1° larger than the second nominal clearance angle, preferably at least 2° larger than the second nominal clearance angle, and more preferably at least 4° larger than the second nominal clearance angle.

According to another embodiment of the invention, the cutting edge is located along its full length substantially in a third imaginary plane that is perpendicular to the centre axis of the cutting insert. Thus, in this case, the cutting edge has its extension in a plane that is parallel to the above-mentioned first and second imaginary planes.

According to another embodiment of the invention, the cutting insert has 90° rotational symmetry about the centre axis of the cutting insert. In this context, the cutting insert is considered to have 90° rotational symmetry about the centre axis even if any of its faces is provided with one or more minor markings, for instance in the form of recesses, that lack 90° rotational symmetry about the centre axis, on condition that these one or more markings have no relevance for the functioning of the cutting insert.

Further advantageous features of the indexable cutting insert according to the present invention will appear from the description following below.

The invention also relates to a milling tool comprising at least one indexable cutting insert of the above-mentioned type. The milling tool is preferably a high feed milling tool

Further advantageous features of the milling tool according to the present invention will appear from the description following below.

### BRIEF DESCRIPTION OF THE DRAWINGS

With reference to the appended drawings, a specific description of embodiments of the invention cited as examples follows below. In the drawings:
- Figs 1a: and 1b are perspective views from different directions of an indexable cutting insert according to a first embodiment of the present invention,
- Fig 1c: is a plan view from above of the cutting insert of Figs 1a and 1b,
- Fig 1d: is a plan view from below of the cutting insert of Figs 1a and 1b,
- Figs 1e: and 1f are lateral views from different directions of the cutting insert of Figs 1a and 1b,
- Fig 1g: is a cut according to the line Ig-Ig in Fig 1c,
- Fig 1h: is a detail enlargement according to the circle Ih in Fig 1g,
- Fig 1i: is a cut according to the line Ii-Ii in Fig 1c,
- Fig 1j: is a detail enlargement according to the circle Ij in Fig 1i,
- Fig 1k: is a lateral view corresponding to Fig 1e,
- Fig 1l: is a cut according to the line II-II in Fig 1k,
- Fig 1m: is a cut according to the line Im-Im in Fig 1k,
- Fig 1n: is a cut according to the line In-In in Fig 1k,
- Fig 2a: is a perspective view of an indexable cutting insert according to a second embodiment of the invention,
- Fig 2b: is a plan view from above of the cutting insert of Fig 2a,
- Fig 2c: is a cut according to the line IIc-IIc in Fig 2b,
- Fig 2d: is a detail enlargement according to the circle IId in Fig 2c,
- Fig 3: is a perspective view of a milling tool provided with cutting inserts according to the embodiment illustrated in Figs 1a-1n, as seen with one of the cutting inserts removed from its insert seat in the tool body of the milling tool,
- Fig 4: is a perspective view from another direction of the milling tool of Fig 3,
- Fig 5: is a lateral view of the milling tool of Fig 3,
- Fig 6: is a front view of the milling tool of Fig 3, and
- Fig 7: is a perspective view of a part of the milling tool of Fig 3 illustrating an insert seat formed in the tool body of the milling tool.

### DETAILED DESCRIPTION OF EMBODIMENTS OF THE INVENTION

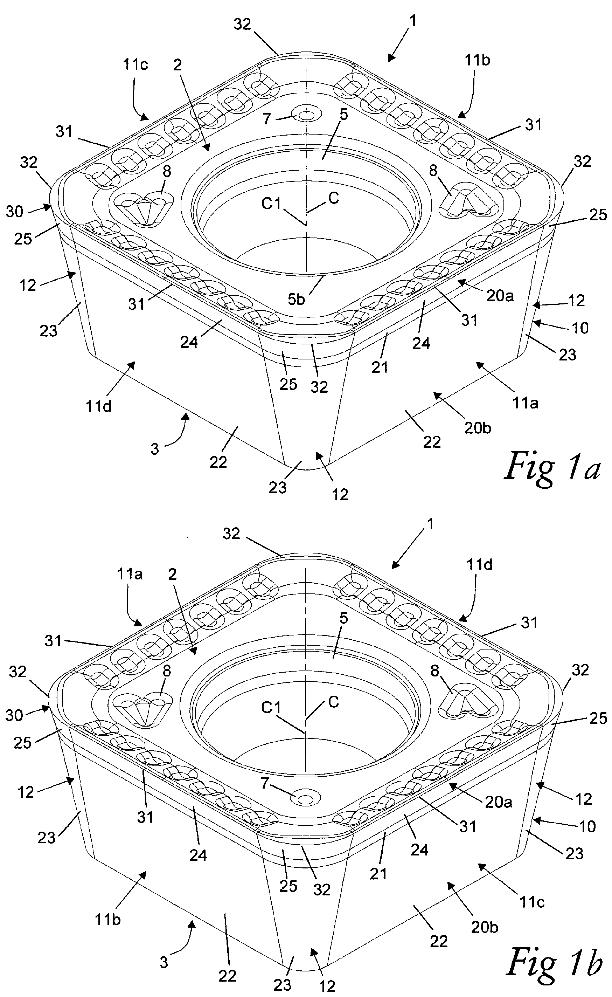

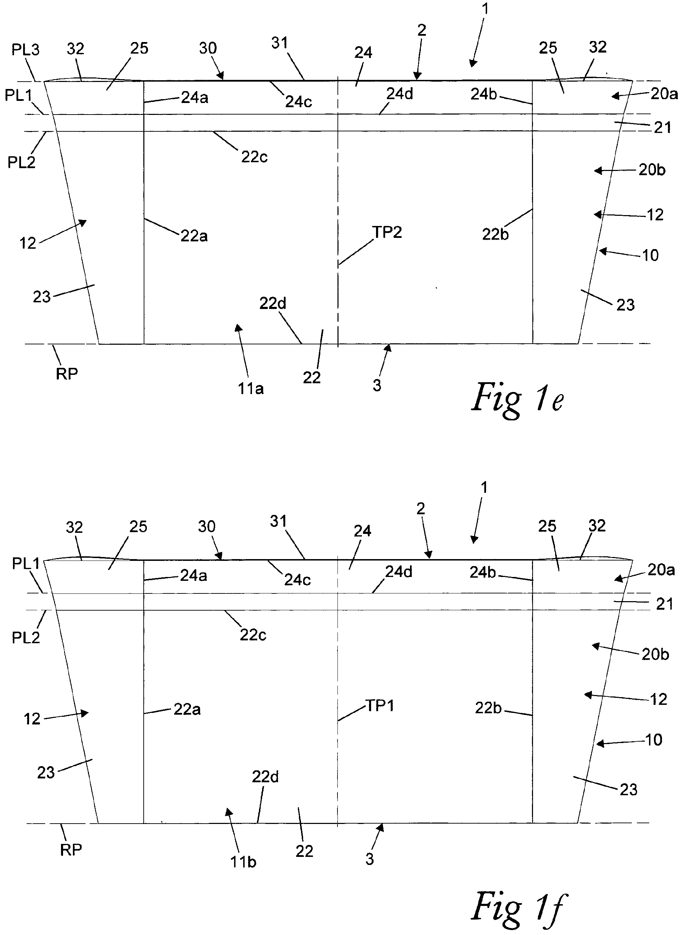

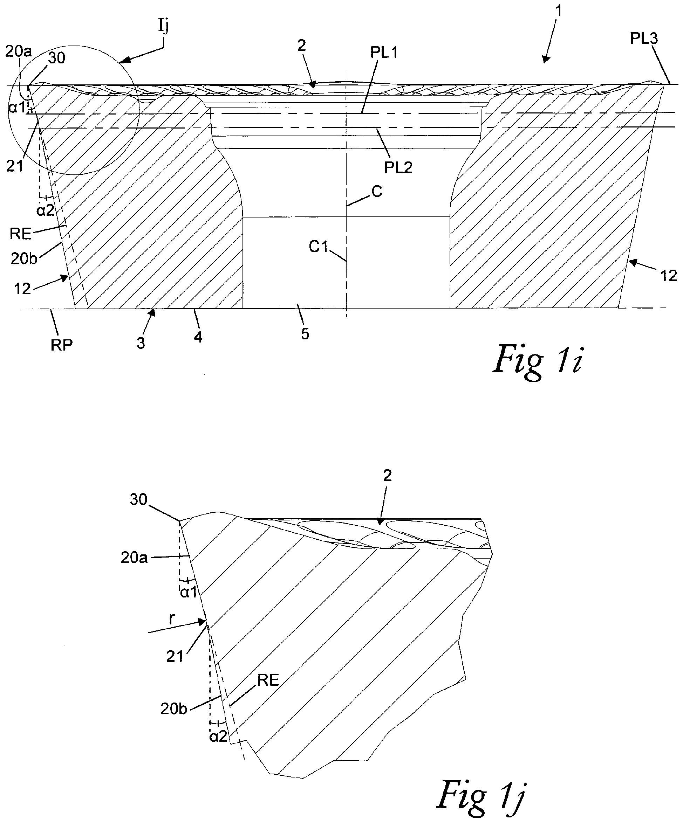

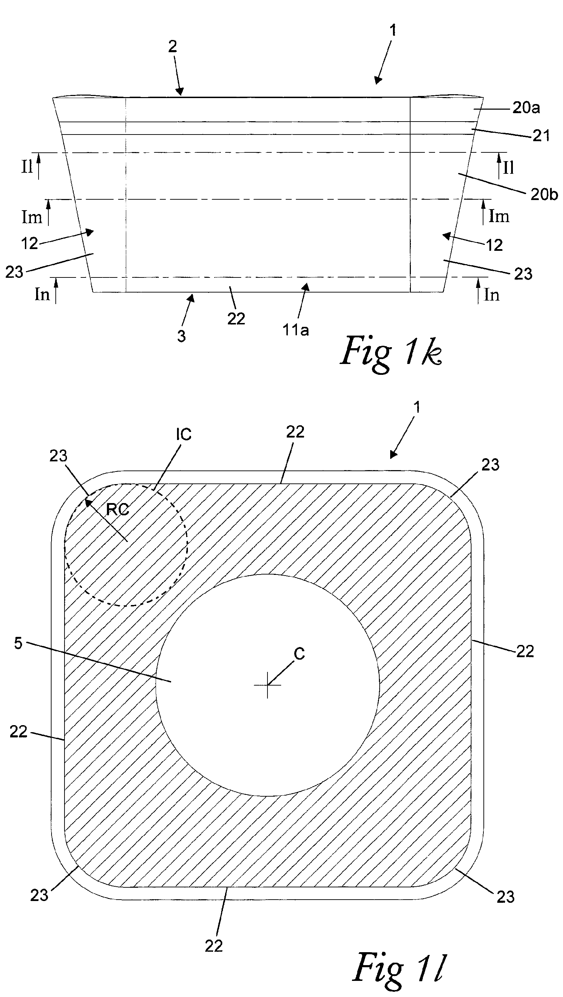

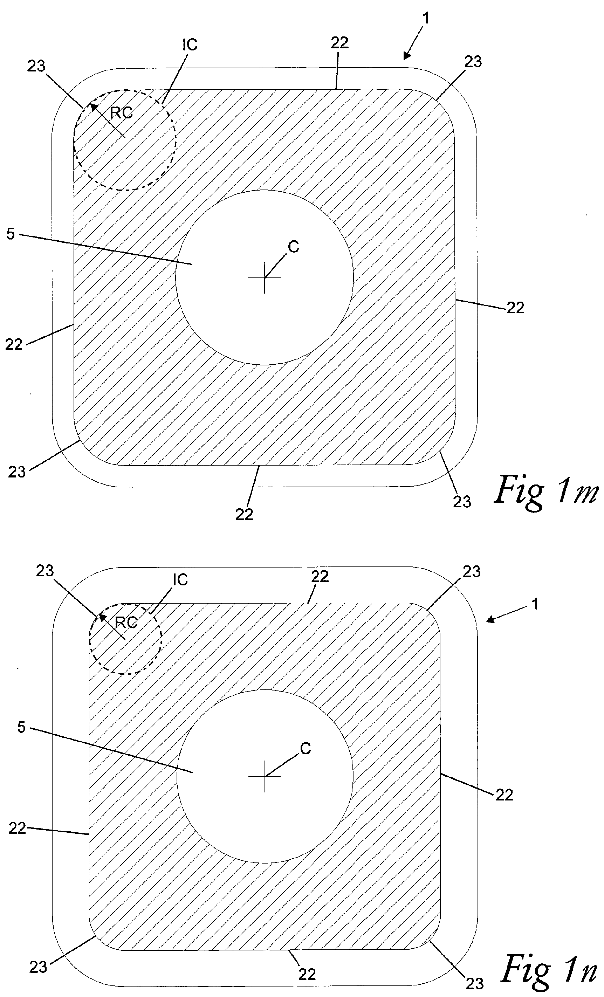

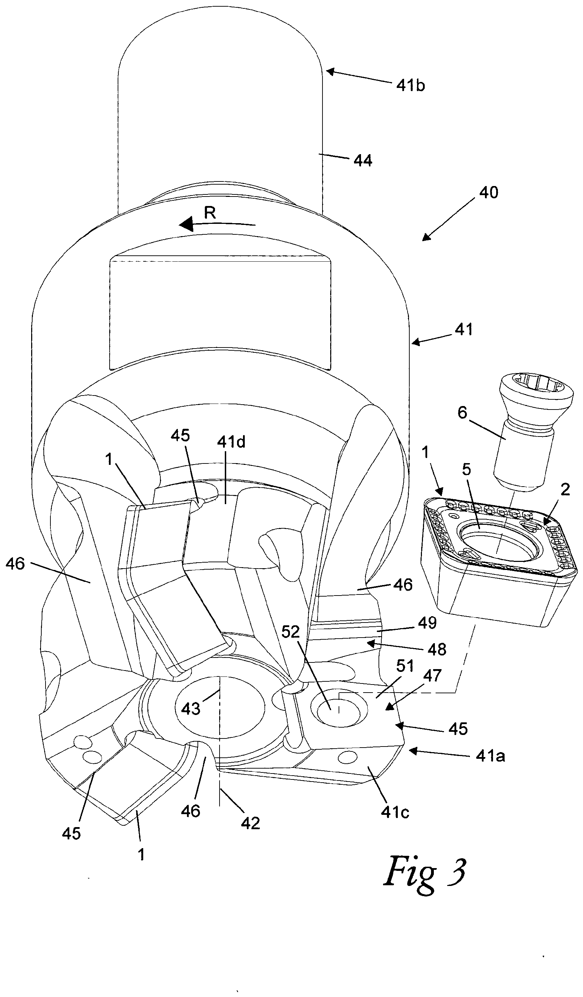

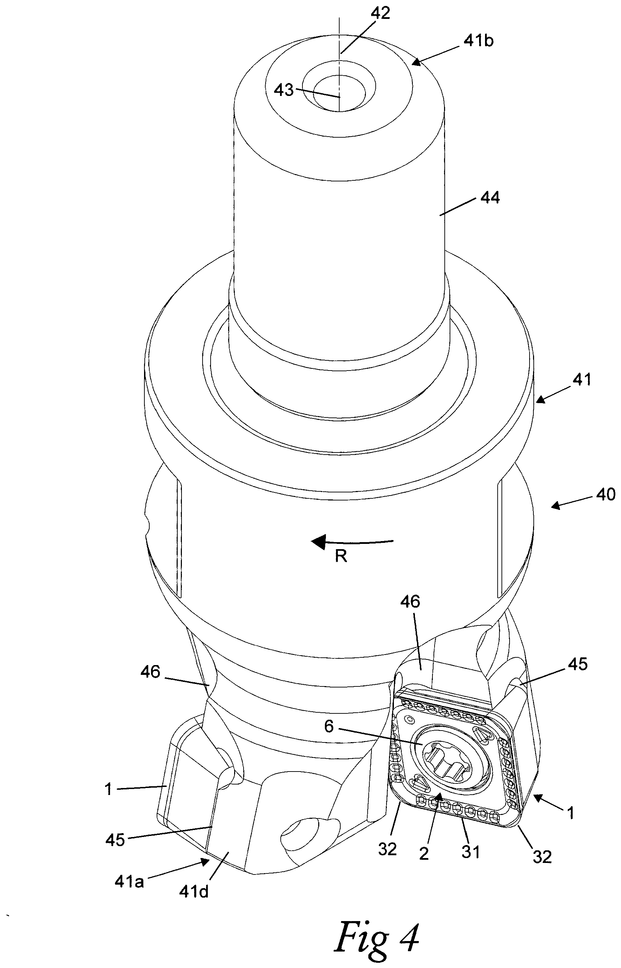

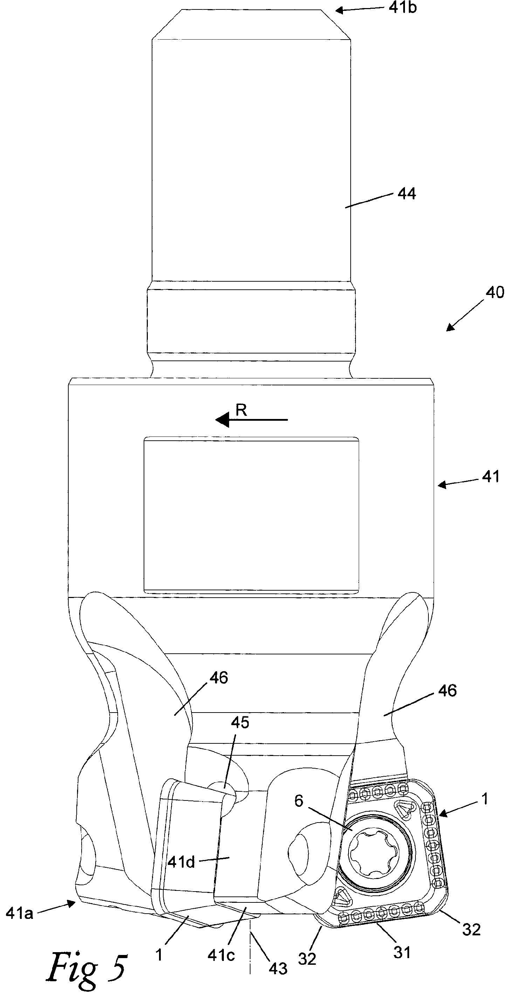

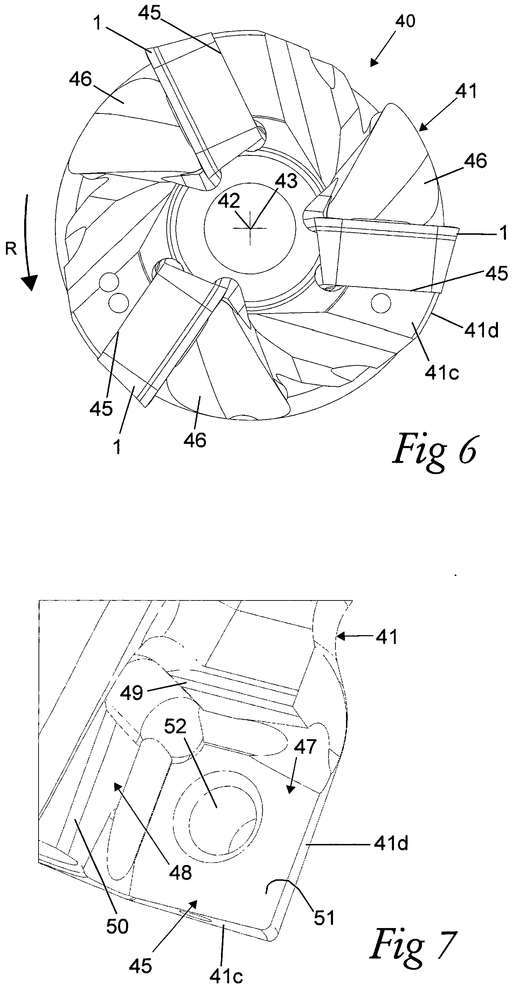

An embodiment of an indexable cutting insert 1 according to the present invention is illustrated in Figs 1a-1n. The cutting insert 1 is configured for use in milling and is configured to be used in a milling tool, for instance a milling tool 40 of the type illustrated in Figs 3-7.

The cutting insert 1 has an essentially quadratic basic shape and is turnable into four different working positions. The cutting insert 1 comprises a rake face 2 and an abutment face 3 arranged on opposite sides of the cutting insert and serving as top and bottom faces of the cutting insert. The rake face 2 and the abutment face 3 are configured to serve as a leading face and a trailing face, respectively, of the cutting insert 1 when the cutting insert is mounted to a tool body 41 (see Figs 3-7) of a milling tool 40 and as seen in an intended direction of rotation R of the tool body. Thus, when mounted in an insert seat 45 in a tool body 41 of a milling tool, the cutting insert 1 is configured to be mounted in the insert seat 45 with the rake face 2 facing forward in the intended direction of rotation R of the tool body and with the abutment face 3 facing rearward as seen in the intended direction of rotation R of the tool body. The cutting insert 1 is rotatable into four different working positions. Thus, the cutting insert 1 may be mounted in four different rotary positions, i.e. four different indexing position, in the associated insert seat 45.

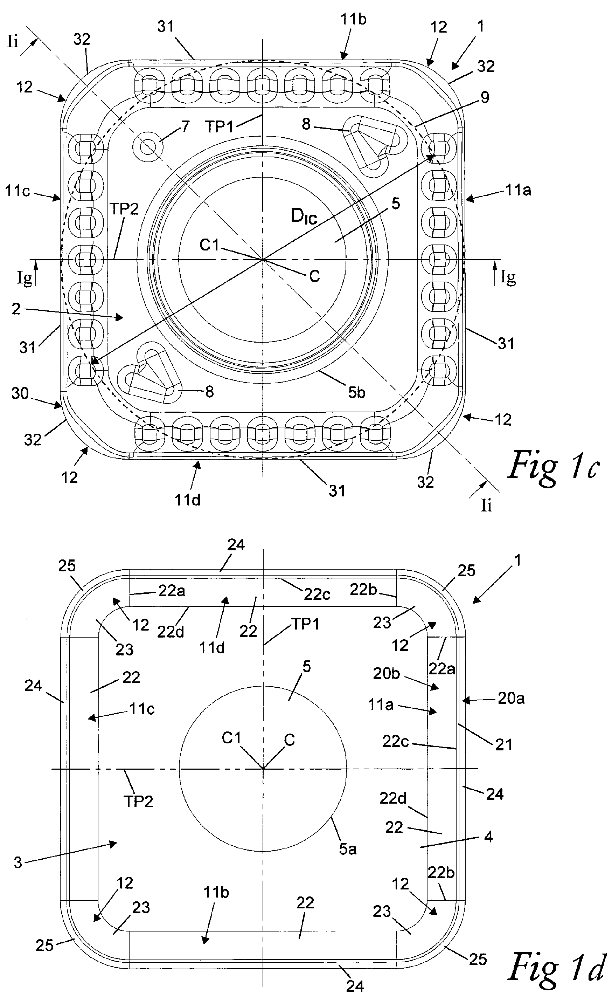

The rake face 2 and the abutment face 3 have an essentially quadratic shape with rounded corners, as seen in a plan view of the cutting insert 1. The abutment face 3 comprises an abutment surface 4 (see Fig 1d) that is configured to serve as a tangential abutment surface of the cutting insert 1 in the different working positions of the cutting insert. When mounted in an associated insert seat 45, the cutting insert 1 is configured to abut against a tangential support surface 51 on a bottom wall 47 in the insert seat via the abutment surface 4 on the abutment face 3. The cutting insert 1 has a centre axis C, which extends between the rake face 2 and the abutment face 3.

The cutting insert 1 is provided with a through hole 5, which extends centrally through the cutting insert between the rake face 2 and the abutment face 3. The centre axis C of the cutting insert coincides with the centre axis C1 of the through hole 5. The through hole 5 is configured to receive a fastening element 6 (see Figs 3-5) in the form of a screw, by means of which the cutting insert 1 may be releasably fixed in an insert seat 45 of a tool body 41. The through hole 5 has a lower circumferential rim 5a, which is formed at an intersection between the through hole 5 and the abutment face 3 and which is located in a lower plane LP that is perpendicular to the centre axis C of the cutting insert 1, and an upper circumferential rim 5b, which is formed at an intersection between the through hole 5 and the rake face 2 and which is located in an upper plane UP that is perpendicular to the centre axis C of the cutting insert 1. The through hole 5 has a void volume defined by its boundaries and calculated as the internal volume of the through hole 5 between said lower plane LP and said upper plane UP, i.e. the volume of the void extending from said lower plane LP to said upper plane UP.

The cutting insert 1 has such shape that the following condition is fulfilled: VV/MV≥0.24, where
- VV is the above-mentioned void volume of the through hole 5, and
- MV is the material volume of the cutting insert 1, i.e. the volume of the cutting insert 1 occupied by its constituent material.

Thus, this condition implies that the void volume of the through hole 5 is at least 0.24 times the material volume of the cutting insert 1.

The cutting insert 1 is of such a small size that a diameter D_{IC} (see Fig 1c) of an inscribed circle 9 of the rake face 2, as seen in a plan view along the centre axis C of the cutting insert 1, is smaller than or equal to 10 mm, more preferably smaller than or equal to 8 mm. The diameter D_{IC} is at least 3.5 mm, preferably at least 5 mm.

A peripheral surface 10 extends around the cutting insert between the rake face 2 and the abutment face 3. The peripheral surface 10 comprises four main side faces 11a-11d and four corner side faces 12, wherein each corner side face 12 is located between two adjacent main side faces 11a-11d. Each individual main side face 11a-11d and each individual corner side face 12 extends from the rake face 2 to the abutment face 3. The main side faces comprises a first pair of main side faces 11a, 11c located opposite to each other on two opposite sides of the cutting insert 1 and a second pair of main side faces 11b, 11d located opposite to each other on two other opposite sides of the cutting insert. Thus, the two main side faces 11a, 11c in said first pair are located opposite to each other on mutually opposite sides of the centre axis C of the cutting insert 1. In the corresponding manner, the two main side faces 11b, 11d in said second pair are located opposite to each other on mutually opposite sides of the centre axis C of the cutting insert 1. The four main side faces 11a-11d are, within manufacturing tolerances, identical to each other. Also the four corner side faces 12 are, within manufacturing tolerances, identical to each other.

In the illustrated embodiment, the rake face 2 is provided with markings 7, 8 in the form of recesses in order to facilitate an identification of the different working positions of the cutting insert 1. Except for the markings 7, 8, the cutting insert has 90° rotational symmetry about the centre axis C of the cutting insert 1.

A first transverse plane TP1, which constitutes an imaginary plane, extends halfway between the two main side faces 11a, 11c in said first pair and contains the centre axis C of the cutting insert 1. A second transverse plane TP2, which also constitutes an imaginary plane, extends halfway between the two main side faces 11b, 11d in said second pair and contains the centre axis C of the cutting insert 1. The first and second transverse planes TP1, TP2 extend perpendicularly to each other and intersect each other along the centre axis C.

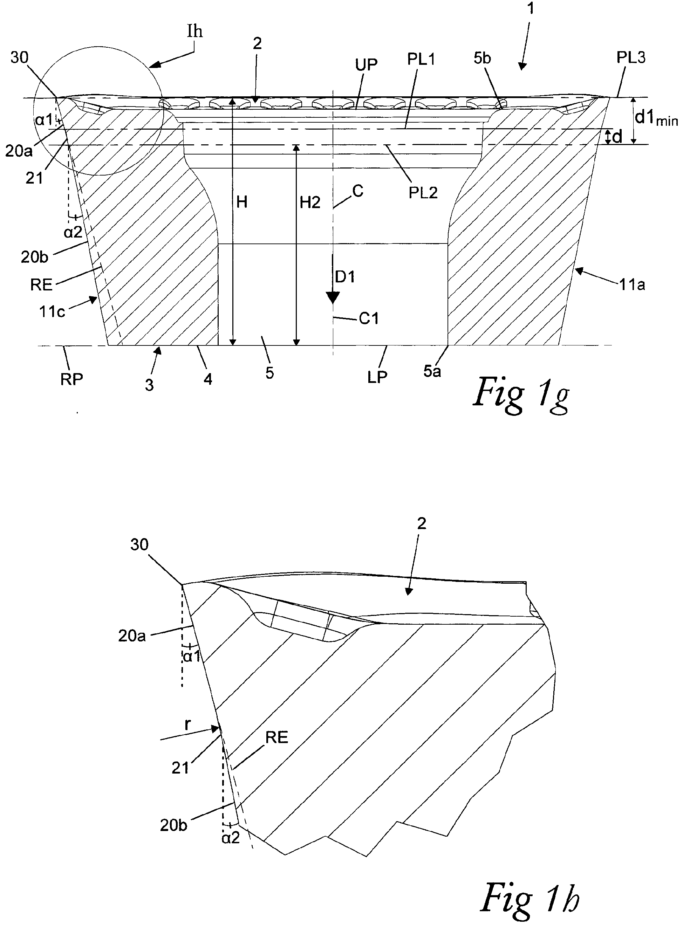

The cutting insert 1 comprises a first clearance surface 20a, which is included in the peripheral surface 10 and fully surrounds a first portion of the centre axis C. The first clearance surface 20a extends between the rake face 2 and a first imaginary plane PL1 that is perpendicular to the centre axis C, wherein the first clearance surface 20a has a lower edge located along its full length substantially in the first imaginary plane PL1 and an upper edge formed at the intersection between the first clearance surface 20a and the rake face 2. The first clearance surface 20a is inclined in relation to the centre axis C and configured to define a positive first nominal clearance angle α1 (see Figs 1h and 1j). The cutting insert 1 also comprises a second clearance surface 20b, which is included in the peripheral surface 10 and fully surrounds a second portion of the centre axis C. The second clearance surface 20b extends between the abutment face 3 and a second imaginary plane PL2 that is perpendicular to the centre axis C and located at a distance from the first imaginary plane PL1, wherein the second clearance surface 20b has an upper edge located along its full length substantially in the second imaginary plane PL2 and a lower edge formed at the intersection between the second clearance surface 20b and the abutment face 3. The second clearance surface 20b is inclined in relation to the centre axis C and configured to define a positive second nominal clearance angle a2 (see Figs 1h and 1j) that is smaller than the first nominal clearance angle α1. The second nominal clearance angle α2 is at least 1° smaller than the first nominal clearance angle α1, preferably at least 2° smaller than the first nominal clearance angle α1, and more preferably at least 4° smaller than the first nominal clearance angle α1.

The first nominal clearance angle α1 is suitably smaller than or equal to 20°, and is preferably in the range of 5-20°, more preferably in the range of 10-20°, and most preferably in the range of 12-18°. The second nominal clearance angle α2 is suitably in the range of 1-15°, and preferably in the range of 5-15°.

The cutting insert 1 further comprises a transition surface 21, which is included in the peripheral surface 10 and fully surrounds a third portion of the centre axis C located between said first and second portions of the centre axis C. The transition surface 21 extends between the first imaginary plane PL1 and the second imaginary plane PL2, wherein the transition surface 21 has a lower edge located along its full length substantially in the second imaginary plane PL2 and an upper edge located along its full length substantially in the first imaginary plane PL1. Thus, the transition surface 21 forms a transition between the first and second clearance surfaces 20a, 20b.

The transition surface 21 is suitably concave with a radius of curvature r in the range of 0.5-7.0 mm, and preferably in the range of 1.0-6.0 mm.

In the illustrated embodiment, the first clearance surface 20a extends in a straight line as seen in any section plane that contains the centre axis C and intersects the peripheral surface 10, wherein the first clearance surface 20a is so arranged in relation to the transition surface 21 and the second clearance surface 20b that an imaginary rectilinear extension RE (see Figs 1g-1j) of the first clearance surface 20a from the first imaginary plane PL1 to the abutment face 3, in any section plane that contains the centre axis C and intersects the peripheral surface 10, is located between the transition surface 21 and the centre axis C in the region between the first and second imaginary planes PL1, PL2 and located between the second clearance surface 20b and the centre axis C in the region between the second imaginary plane PL2 and the abutment face 3.

In the illustrated embodiment, also the second clearance surface 20b extends in a straight line as seen in any section plane that contains the centre axis C and intersects the peripheral surface 10, wherein the second clearance surface 20b is so arranged in relation to the transition surface 21 and the first clearance surface 20a that an imaginary rectilinear extension of the second clearance surface 20b from the second imaginary plane PL2 to the rake face 2, in any section plane that contains the centre axis C and intersects the peripheral surface 10, is located between the transition surface 21 and the centre axis C in the region between the first and second imaginary planes PL1, PL2 and located between the first clearance surface 20a and the centre axis C in the region between the first imaginary plane PL1 and the rake face 2.

A continuous cutting edge 30 is formed at an intersection between the first clearance surface 20a and the rake face 2 and extends around the centre axis C along the periphery of the rake face 2. In the illustrated embodiment, the continuous cutting edge 30 is located along its full length substantially in a third imaginary plane PL3 that is perpendicular to the centre axis C.

The continuous cutting edge 30 consists of the following separate cutting edges:
- four main cutting edges 31 formed at an intersection between a respective one of the four main side faces 11a-11d and the rake face 2; and
- four curved corner cutting edges 32 formed at an intersection between a respective one of the four corner side faces 12 and the rake face 2, wherein each one the curved corner cutting edges 32 is located between two adjacent main cutting edges 31.

The first and second clearance surfaces 20a, 20b and the transition surface 21 are suitably configured such that the following condition is fulfilled in any section plane across the cutting insert 1 that contains the centre axis C and intersects the peripheral surface 10: 0.60 ≤ H2/H ≤ 0.90, preferably 0.70 ≤ H2/H ≤ 0.90, where:
- H is the perpendicular distance from a reference plane RP, which is perpendicular to the centre axis C and contains said abutment surface 4, to the cutting edge 30, and
- H2 is the distance from said reference plane RP to the second imaginary plane PL2.

In the illustrated embodiment, the above-mentioned lower plane LP, which contains the lower rim 5a of the through hole 5, coincides with said reference plane RP.

Furthermore, the distance d between the first imaginary plane PL1 and the second imaginary plane PL2 is suitably at least 0.1 times d1ₘᵢₙ and no more than 0.9 times d1ₘᵢₙ, preferably at least 0.2 times d1ₘᵢₙ and no more than 0.5 times d1ₘᵢₙ, where d1ₘᵢₙ is the shortest perpendicular distance between the second imaginary plane PL2 and the cutting edge 30.

The second clearance surface 20b is unground and consists of four substantially planar main surface portions 22 provided on a respective one of the main side faces 11a-11d and four curved corner surface portions 23 provided on a respective one of the corner side faces 12. Each main surface portion 22 extends from one of the four corner surface portions 23 to another one of the four corner surface portions 23 and has:
- a substantially rectilinear first transverse edge 22a through which it adjoins to the former corner surface portion 23;
- a substantially rectilinear second transverse edge 22b through which it adjoins to the latter corner surface portion 23;
- a first longitudinal edge 22c, which extends from the first transverse edge 22a to the second transverse edge 22b and which is located along its full length substantially in the second imaginary plane PL2, wherein each one of the first and second transverse edges 22a, 22b extends perpendicularly, or at least substantially perpendicularly, to the first longitudinal edge 22c; and
- an opposite second longitudinal edge 22d, which extends from the first transverse edge 22a to the second transverse edge 22b and which is formed at the intersection between the main surface portion 22 and the abutment face 3.

It follows from the definition above, that the first and second transverse edges 22a, 22b of the main surface portion 22 on each one of the main side faces 11a, 11c in the above-mentioned first pair of main side faces are substantially parallel to the above-mentioned second transverse plane TP2, and that the first and second transverse edges 22a, 22b of the main surface portion 22 on each one of the main side faces 11b, 11d in the above-mentioned second pair of main side faces are substantially parallel to the above-mentioned first transverse plane TP1.

In the illustrated embodiment, the second longitudinal edge 22d of each main surface portion 22 is located along its full length substantially in the above-mentioned reference plane RP.

The second clearance surface 20b is inclined outwards from the abutment face 3, such that:
- the main surface portion 22 on each one of the main side faces 11a, 11c in the above-mentioned first pair of main side faces has its second longitudinal edge 22d located closer to the first transverse plane TP1 than its first longitudinal edge 22c, as seen in any plane that is parallel to the second transverse plane TP2 and extends across the main surface portion 22; and
- the main surface portion 22 on each one of the main side faces 11b, 11d in the above-mentioned second pair of main side faces has its second longitudinal edge 22d located closer to the second transverse plane TP2 than its first longitudinal edge 22c, as seen in any plane that is parallel to the first transverse plane TP1 and extends across the main surface portion 22.

In the illustrated embodiment, each corner surface portion 23 is conically shaped and tangentially connected to the adjacent main surface portions 22 on either side of the corner surface portion 23. In this case, the corner surface portions 23 lie on the lateral surface of a respective imaginary cone IC that points in a reference direction D1 defined as a direction from the rake face 2 towards the abutment face 3 along the centre axis C of the cutting insert 1. Each such imaginary cone IC has a cone axis that is parallel to the centre axis C of the cutting insert 1. The periphery of such an imaginary cone IC is illustrated in broken lines in the cross-sectional views in Figs 11-1n.

The above-defined conical shape of the corner surface portions 23 implies that the radius of curvature RC (see Figs 1l-1n) of each corner surface portion 23, as seen in cross-sectional views perpendicularly to the centre axis C of the cutting insert 1, continuously and gradually decreases when moving downward along the corner surface portion 23 in the above-mentioned reference direction D1.

As previously mentioned, there are no pronounced or clearly visible discontinuity lines between the substantially planar main surface portions 22 and the conically shaped corner surface portions 23, due to the fact that the second clearance surface is unground. Accordingly, the first and second transverse edges 22a, 22b of each main surface portion 22 do not appear as visible discontinuity lines on the second clearance surface 20b. The first and second transverse edges 22a, 22b of each main surface portion 22 constitute the boundary lines along which the substantially planar main surface portion 22 meets the adjacent conically shaped corner surface portions 23. The positions of these boundary lines on the second clearance surface 20b, and thereby the positions of the first and second transverse edges 22a, 22b of each main surface portion 22, can be established by 3D scanning of the cutting insert 1, for instance with the use of ZEISS INSPECT Optical 3D, followed by computer-based analysis, in a conventional manner well known to a person skilled in the art. In this case, the substantially planar main surface portion 22 is approximated by a best-fit and planar reference plane, for instance a so-called Gauss best-fit plane, and each adjacent conically shaped curved corner surface portion 23 is approximated as a part of the lateral surface of a respective best-fit and smooth reference cone, for instance a so-called Gauss best-fit cone. The first and second transverse edges 22a, 22b of the main surface portion 22 are then derived as the lines of intersection between the best-fit reference plane and each best-fit reference cone.

The first clearance surface 20a, which may be ground or unground, consists of four main surface portions 24 provided on a respective one of the main side faces 11a-11d and four curved corner surface portions 25 provided on a respective one of the corner side faces 12. Each main surface portion 24 extends from one of the four corner surface portions 25 to another one of the four corner surface portions 25 and has:
- a substantially rectilinear first transverse edge 24a through which it adjoins to the former corner surface portion 25;
- a substantially rectilinear second transverse edge 24b through which it adjoins to the latter corner surface portion 25;
- a first longitudinal edge 24c, which extends from the first transverse edge 24a to the second transverse edge 24b and which is formed at the intersection between the main surface portion 24 and the rake face 2; and
- an opposite second longitudinal edge 24d, which extends from the first transverse edge 24a to the second transverse edge 24b and which is located along its full length substantially in the first imaginary plane PL1, wherein each one of the first and second transverse edges 24a, 24b preferably extends perpendicularly, or at least substantially perpendicularly, to the second longitudinal edge 24d.

Each one of the main surface portions 24 is preferably planar, or at least substantially planar. In the illustrated embodiment, the first longitudinal edge 24c of each main surface portion 24 is located along its full length substantially in the above-mentioned third imaginary plane PL3.

The first clearance surface 20a is inclined inwards from the rake face 2, such that:
- the main surface portion 24 on each one of the main side faces 11a, 11c in the above-mentioned first pair of main side faces has its second longitudinal edge 24d located closer to the first transverse plane TP1 than its first longitudinal edge 24c, as seen in any plane that is parallel to the second transverse plane TP2 and extends across the main surface portion 24; and
- the main surface portion 24 on each one of the main side faces 11b, 11d in the above-mentioned second pair of main side faces has its second longitudinal edge 24d located closer to the second transverse plane TP2 than its first longitudinal edge 24c, as seen in any plane that is parallel to the first transverse plane TP1 and extends across the main surface portion 24.

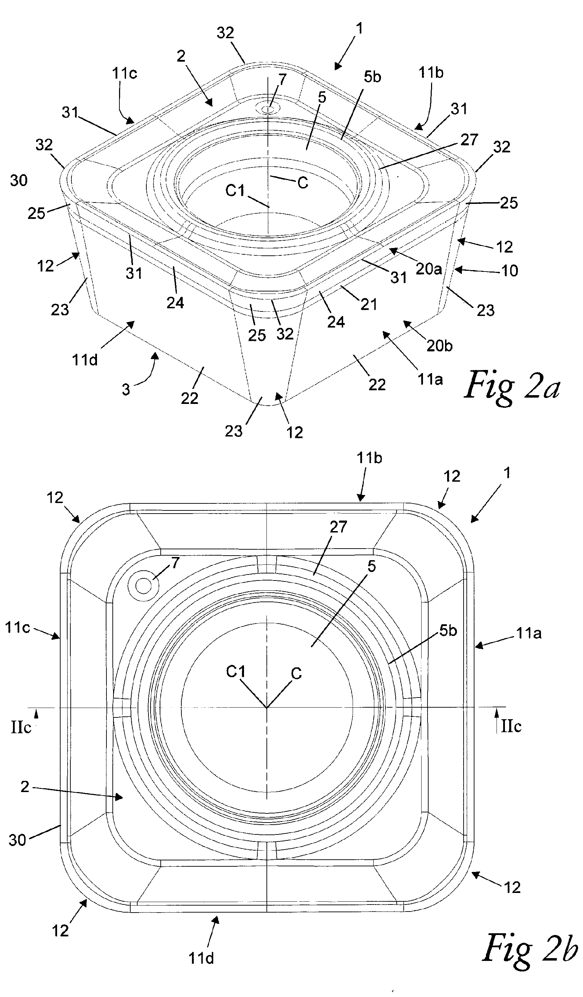

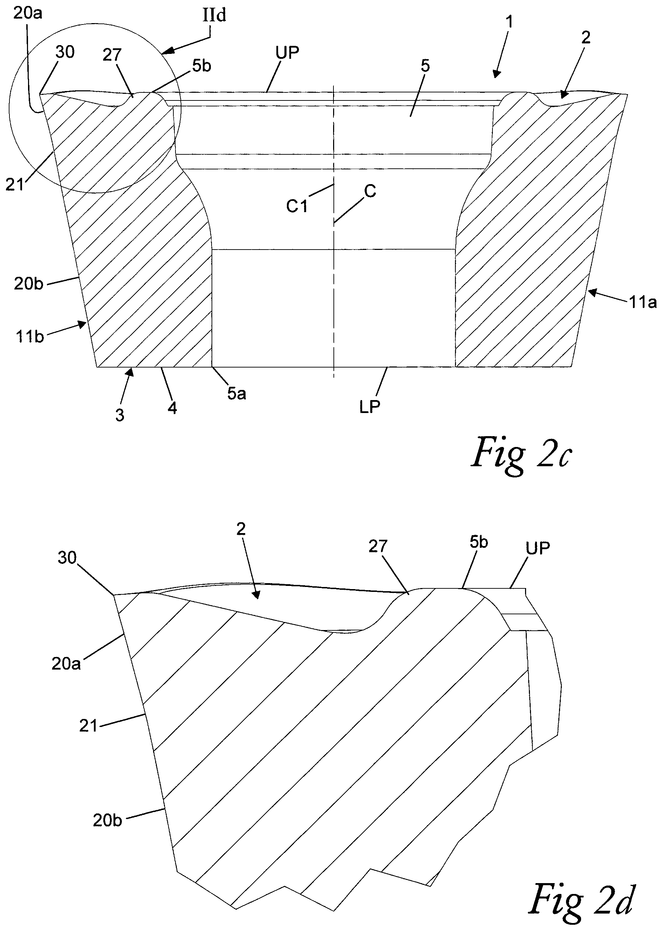

Another embodiment of an indexable cutting insert 1 according to the present invention is illustrated in Figs 2a-2d. This cutting insert 1 has a rake face 2 with a different design than that of the rake face 2 of the cutting insert 1 illustrated in Figs 1a-1n. As to the rest, the cutting insert 1 illustrated in Figs 2a-2d has a design corresponding to the cutting insert 1 that has been described above with reference to Figs 1a-1n. In the embodiment illustrated in Figs 2a-2d, a circular bead 27 is provided on the rake face 2 around the through hole 5, in order to influence the chip-breaking properties of the rake face 2 in a favourable manner.

Figs 3-7 illustrate a milling tool 40 in the form of a high feed milling tool. The milling tool 40 comprises a tool body 41 and is configured to be rotated about an axis of rotation 42. The tool body 41 has a front end 41a and an opposite rear end 41b. A longitudinal centre axis 43 of the tool body 41 extends between the rear end 41b and the front end 41a of the tool body, wherein this centre axis 43 coincides with the axis of rotation 42 of the milling tool 40. A rear part of the tool body 41 forms a connection member 44, through which the tool body 41 is mountable, directly or via an intermediate tool holder, to a rotating spindle or the similar of a machine, for instance a milling machine. At the front end 41a, the tool body 41 is provided with an axially forwardly facing front face 41c. The tool body 41 also has a peripheral surface 41d that adjoins to the front face 41c and extends from the front face 41c toward the rear end 41b of the tool body.

The tool body 41 is provided with several insert seats 45 which are evenly or at least substantially evenly distributed in the circumferential direction of the tool body 41 and configured to receive a respective indexable cutting insert 1. In the illustrated embodiment, the milling tool 40 is provided with indexable cutting inserts 1 of the type illustrated in Figs 1a-1n. Each cutting insert 1 is configured to be detachably mounted in its associated insert seat 45. A chip pocket 46 is provided in the tool body 41 in front of each insert seat 45 as seen in the intended direction of rotation R of the tool body 41.

The cutting inserts 1 are made of hard and wear-resistant material, preferably cemented carbide, and the tool body 41 is preferably made of steel.

In the embodiment illustrated in Figs 3-7, the tool body 41 is provided with three insert seats 45 spaced apart in the circumferential direction of the tool body. However, the tool body 41 may as an alternative, inter alia depending on the diameter of the tool body, be provided with any other suitable number of insert seats 45. Each insert seat 45 is located at a transition between the front face 41c and the peripheral surface 41d of the tool body 41. Each insert seat 45 comprises a space configured to accommodate an indexable cutting insert 1, wherein this space is open toward the front face 41c of the tool body 41 in order to allow a cutting insert 1 mounted in the insert seat 45 to project in the axial direction of the tool body 41 beyond the front end 41a thereof and also open toward the peripheral surface 41d of the tool body 41 in order to allow a cutting insert 1 mounted in the insert seat 45 to project in the radial direction of the tool body 41 beyond the peripheral surface 41d thereof.

Each insert seat 45 comprises a substantially tangentially facing bottom wall 47, a substantially tangentially facing top opening opposite to the bottom wall 47 and an internal wall 48 provided between the bottom wall 47 and the top opening. The top opening is facing the chip pocket 46 provided in front of the insert seat 45. The internal wall 48 extends transversely to the bottom wall 47 and delimits the cutting insert accommodating space together with the bottom wall 47. The internal wall 48 is provided with an axial support surface 49 configured to abut against the main surface portion 22 on one of the main side faces 11a-11d of a cutting insert 1 and a radial support surface 50 configured to abut against the main surface portion 22 on another one of the main side faces 11a-11d of the cutting insert 1. The bottom wall 47 of each insert seat 45 is provided with a planar tangential support surface 51 configured to abut against the tangential abutment surface 4 on the abutment face 3 of the cutting insert 1.

The through hole 5 in the cutting insert 1 is configured to receive a fastening element 6 in the form of a screw, by means of which the cutting insert 1 may be releasably fixed in the associated insert seat 45 of the tool body 41 in any of its working positions. The fastening element 6 is configured to extend through the through hole 5 in the cutting insert 1 and to be in threaded engagement with a screw hole 52 provided in the bottom wall 47 of the insert seat 45.

When mounted in one of the insert seats 45 in any of its working positions, the cutting insert 1 is configured to:
- abut against the radial support surface 50 on the internal wall 48 of the insert seat 45 through the main surface portion 22 on one of the main side faces 11a-11d of the cutting insert,
- abut against the axial support surface 49 on the internal wall 48 of the insert seat 45 through the main surface portion 22 on another one of the main side faces 11a-11d of the cutting insert, and
- abut against the tangential support surface 51 on the bottom wall 47 of the insert seat 45 through the tangential abutment surface 4 on the abutment face 3 of the cutting insert.

Each insert seat 45 is so designed that the cutting insert 1 is given a positive axial tipping-in angle and a positive radial tipping-in angle when mounted in the insert seat 45 in any of its working positions.

When the cutting insert 1 is mounted in the insert seat 45 in any of its working positions, one of the main cutting edges 31 of the cutting insert is positioned to form an active main cutting edge in the milling tool 40, wherein one of the curved corner cutting edges 32 of the cutting insert, which has a position in the tool body 41 radially inwardly of the active main cutting edge 31, is configured to operate as a ramping cutting edge.

The invention is of course not in any way restricted to the embodiments described above. On the contrary, many possibilities to modifications thereof will be apparent to a person with ordinary skill in the art without departing from the basic idea of the invention such as defined in the appended claims.

## Claims

1. An indexable cutting insert for use in milling, the cutting insert (1) having a substantially quadratic basic shape and being turnable into four different working positions and comprising:
- a rake face (2) and an abutment face (3) arranged on opposite sides of the cutting insert (1), the cutting insert (1) having a centre axis (C) that extends between the rake face (2) and the abutment face (3), wherein a diameter (D_{IC}) of an inscribed circle of the rake face (2) as seen in a plan view along the centre axis (C) is smaller than or equal to 10 mm, and wherein the abutment face (3) comprises an abutment surface (4) that is configured to serve as a tangential abutment surface of the cutting insert (1) in said working positions of the cutting insert and abut against a corresponding tangential support surface (51) in an insert seat (45) in a tool body (41) of a milling tool when the cutting insert (1) is mounted in the insert seat in any of its working positions;
- a peripheral surface (10) extending around the cutting insert (1) between the rake face (2) and the abutment face (3) and comprising:
• four main side faces (11a, 11b, 11c, 11d), a first pair of which being arranged opposite to each other on two opposite sides of the cutting insert (1) and a second pair of which being arranged opposite to each other on two other opposite sides of the cutting insert (1), and
• four corner side faces (12), each of which being arranged between two adjacent main side faces (11a, 11b, 11c, 11d);
- a first clearance surface (20a) included in the peripheral surface (10) and fully surrounding a first portion of the centre axis (C), wherein the first clearance surface (20a) extends between the rake face (2) and a first imaginary plane (PL1) that is perpendicular to the centre axis (C), and wherein the first clearance surface (20a) is inclined in relation to the centre axis (C) and configured to define a positive first nominal clearance angle (α1);
- an unground second clearance surface (20b) included in the peripheral surface (10) and fully surrounding a second portion of the centre axis (C), wherein the second clearance surface (20b) extends between the abutment face (3) and a second imaginary plane (PL2) that is perpendicular to the centre axis (C) and located at a distance from the first imaginary plane (PL1), wherein the second clearance surface (20b) is inclined in relation to the centre axis (C) and configured to define a positive second nominal clearance angle (α2) that is smaller than said first nominal clearance angle (α1), and wherein the second clearance surface (20b) consists of four substantially planar main surface portions (22) provided on a respective one of said main side faces (11a, 11b, 11c, 11d) and four curved corner surface portions (23) provided on a respective one of said corner side faces (12), each one of said main surface portions (22) extending from one of the four corner surface portions (23) to another one of the four corner surface portions (23) and having a substantially rectilinear first transverse edge (22a) through which it adjoins to the former corner surface portion (23), a substantially rectilinear second transverse edge (22b) through which it adjoins to the latter corner surface portion (23), a first longitudinal edge (22c), which extends between the first and second transverse edges (22a, 22b) and is located along its full length substantially in the second imaginary plane (PL2), and an opposite second longitudinal edge (22d), which extends between the first and second transverse edges (22a, 22b) and is formed at an intersection between the main surface portion (22) and the abutment face (3);
- a transition surface (21) included in the peripheral surface (10) and fully surrounding a third portion of the centre axis (C) located between said first and second portions of the centre axis (C), wherein the transition surface (21) extends between the first imaginary plane (PL1) and the second imaginary plane (PL2); and
- a cutting edge (30) formed at an intersection between the first clearance surface (20a) and the rake face (2) and extending around the centre axis (C) along a periphery of the rake face (2),
wherein the cutting insert (1) is provided with a through hole (5), which extends centrally through the cutting insert between the rake face (2) and the abutment face (3), the through hole (5) having a centre axis (C1) that coincides with the centre axis (C) of the cutting insert (1),
**characterized in:**
- **that** the cutting insert (1) has such shape that the following condition is fulfilled: VV/MV≥0.24, where
• VV is the void volume of the through hole (5), and
• MV is the material volume of the cutting insert (1);
- **that** the first transverse edge (22a) of each main surface portion (22) of said four main surface portions (22) extends substantially perpendicularly to the first longitudinal edge (22c) of the associated main surface portion (22); and
- **that** the second transverse edge (22b) of each main surface portion (22) of said four main surface portions (22) extends substantially perpendicularly to the first longitudinal edge (22c) of the associated main surface portion (22).

2. An indexable cutting insert according to claim 1, **characterized in that** each corner surface portion (23) is conically shaped and tangentially connected to the adjacent main surface portions (22) on either side of the corner surface portion (23).

3. An indexable cutting insert according to claim 1 or 2, **characterized in that** a diameter (D_{IC}) of an inscribed circle of the rake face (2) as seen in a plan view along the centre axis (C) of the cutting insert (1) is at least 3.5 mm, preferably at least 5 mm.

4. An indexable cutting insert according to any of claims 1-3, **characterized in that** a diameter (D_{IC}) of an inscribed circle of the rake face (2) as seen in a plan view along the centre axis (C) of the cutting insert (1) is smaller than or equal to 8 mm.

5. An indexable cutting insert according to any of claims 1-4, **characterized in that** the first clearance surface (20a) extends in a straight line as seen in any section plane that contains the centre axis (C) of the cutting insert (1) and intersects the peripheral surface (10), wherein the first clearance surface (20a) is so arranged in relation to the transition surface (21) and the second clearance surface (20b) that an imaginary rectilinear extension (RE) of the first clearance surface (20a) from the first imaginary plane (PL1) to the abutment face (3), in any section plane that contains the centre axis (C) of the cutting insert (1) and intersects the peripheral surface (10), is located between the transition surface (21) and the centre axis (C) of the cutting insert (1) in the region between the first and second imaginary planes (PL1, PL2) and located between the second clearance surface (20b) and the centre axis (C) of the cutting insert (1) in the region between the second imaginary plane (PL2) and the abutment face (3).

6. An indexable cutting insert according to any of claims 1-5, **characterized in that** said first and second clearance surfaces (20a, 20b) and said transition surface (21) are configured such that the following condition is fulfilled in any section plane across the cutting insert (1) that contains the centre axis (C) of the cutting insert (1) and intersects the peripheral surface (10): 0.60 ≤ H2/H ≤ 0.90, preferably 0.70 ≤ H2/H ≤ 0.90, where:
- H is the perpendicular distance from a reference plane (RP), which is perpendicular to the centre axis (C) of the cutting insert (1) and contains said abutment surface (4), to the cutting edge (30), and
- H2 is the distance from said reference plane (RP) to the second imaginary plane (PL2).

7. An indexable cutting insert according to claim 6, **characterized in that** the distance (d) between the first imaginary plane (PL1) and the second imaginary plane (PL2) is at least 0.1 times d1ₘᵢₙ and no more than 0.9 times d1ₘᵢₙ, preferably at least 0.2 times d1ₘᵢₙ and no more than 0.5 times d1ₘᵢₙ, where d1ₘᵢₙ is the shortest perpendicular distance between the second imaginary plane (PL2) and the cutting edge (30).

8. An indexable cutting insert according to any of claims 1-7, **characterized in that** the transition surface (21) is concave and has a radius of curvature (R) that is larger than or equal to 0.5 mm and smaller than or equal to 7.0 mm, preferably larger than or equal to 1.0 mm and smaller than or equal to 6.0 mm.

9. An indexable cutting insert according to any of claims 1-8, **characterized in that** said second nominal clearance angle (α2) is larger than or equal to 1° and smaller than or equal to 15°, preferably larger than or equal to 5° and smaller than or equal to 15°.

10. An indexable cutting insert according to any of claims 1-9, **characterized in that** said first nominal clearance angle (α1) is smaller than or equal to 20°, preferably 5-20°, more preferably 10-20°, and most preferably 12-18°.

11. An indexable cutting insert according to any of claims 1-10, **characterized in that** said first nominal clearance angle (α1) is at least 1° larger than said second nominal clearance angle (α2), preferably at least 2° larger than said second nominal clearance angle (α2), and more preferably at least 4° larger than said second nominal clearance angle (α2).

12. An indexable cutting insert according to any of claims 1-11, **characterized in that** the cutting edge (30) is located along its full length substantially in a third imaginary plane (PL3) that is perpendicular to the centre axis (C) of the cutting insert (1).

13. An indexable cutting insert according to any of claims 1-12, **characterized in that** the cutting insert (1) has 90° rotational symmetry about the centre axis (C) of the cutting insert.

14. A milling tool comprising at least one indexable cutting insert (1) according to any of claims 1-13.

15. A milling tool according to claim 14, **characterized in that** the milling tool is a high feed milling tool.
